# EUROPEAN PATENT SPECIFICATION

(11) **EP 4 411 499 B1**
(45) Date of publication and mention of the grant of the patent: **27.08.2025**
(21) Application number: 23155195.3
(22) Date of filing: 06.02.2023
(51) Int. Cl.: G05D 1/00, G05D 1/224, G05D 1/242, G05D 1/246, G05D 105/80, G05D 107/90, G05D 109/12, G05D 111/10, G05D 111/50

(54) **METHOD AND SYSTEM FOR GENERATING SCAN DATA OF AN AREA OF INTEREST**
VERFAHREN UND SYSTEM ZUR ERZEUGUNG VON SCANDATEN EINES INTERESSENBEREICHS
PROCÉDÉ ET SYSTÈME DE GÉNÉRATION DE DONNÉES DE BALAYAGE D'UNE ZONE D'INTÉRÊT

(43) Date of publication of application: 07.08.2024
(73) Proprietor: Hexagon Technology Center GmbH, 9435 Heerbrugg (CH)
(72) Inventor: KARRER, Marco, 4242 Laufen (CH); ADZIC, Andrej, 8004 Zürich (CH); ZIEGLER, Thomas, 8032 Zürich (CH); KOLECKI, Jakub, 9436 Balgach (CH)
(74) Representative: Kaminski Harmann

(56) References cited:
- US-A1- 2019 206 044
- US-A1- 2022 199 253

## Description

The present invention pertains to a method and system for generating scan data of an area of interest. More specifically, generating the scan data comprises a robot autonomously scanning an area of interest, or more particularly several areas of interest, in a larger scene, thereby avoiding scanning of "uninteresting" parts of the scene or even the whole scene. Using human input, the areas of interest can be defined in an efficient and intuitive manner. The robot may autonomously travel to and between the defined areas of interest. Optionally, the robot may use path information from the user to support the autonomous navigation to and between points of interest.

The invention aims at minimizing human effort to scan regions of interest while also minimizing the time needed by the robot to acquire the data. US 2019/206044 A1 discloses a method in which the areas to be scanned are defined on the basis of external data. However, this data may be cumbersome to retrieve and/or a user may have difficulty finding the most relevant data.

EP 3 779 357 A1 discloses a method for surveying an environment by a movable surveying instrument in its environment along a substantially random trajectory, with a progressional capturing of 2D images by at least one camera at the surveying instrument and applying a visual simultaneous location and mapping algorithm (VSLAM) or a visual inertial simultaneous location and mapping algorithm (VISLAM) with a progressional deriving of a sparse evolving point cloud of at least part of the environment, and a progressional deriving of a trajectory of movement.

It would be desirable to allow a user to have areas of interest in an environment scanned without having to carry the scanner through the environment. Also, it would be desirable that the user does not have to wait at the area of interest until the scan has been performed.

WO 2020/088739 A1 discloses several systems and methods for automated facility surveillance using robots having sensors including laser scanners and being configured for autonomously moving through an environment. Autonomous exploration of areas of interest by robots is generally known in the art. Numerous aspects of this field are disclosed, e.g., in: Kompis et al., 'Informed sampling exploration path planner for 3d reconstruction of large scenes', IEEE RA-L 2021; Schmid et al., 'Fast and Compute-efficient Sampling-based Local Exploration Planning via Distributed Learning', ArXiv 2022; Bircher et al., 'Receding Horizon "Next-Best-View" Planner for 3D Exploration', IEEE ICRA 2016; and Cieslewski et al., 'Rapid exploration with multi-rotors: A frontier selection method for high speed flight', IEEE IROS 2017.

However, these methods are focused on complete exploration of an area and assign every part of the scene the same importance. Consequently, a large amount of time is potentially spent on exploring areas which might be of no particular interest to a user.

Other approaches follow a "teach-and-repeat" scheme, for instance Fehr et al., 'Visual-Inertial Teach and Repeat for Aerial Inspection', IEEE ICRA-Workshop 2018. Other approaches include a human in the loop to select interest points (so-called waypoints) while leaving the robot to autonomously find a way to reach these points. For instance such an approach is disclosed by Bartolomei et al., 'Multi-robot coordination with agent-server architecture for autonomous navigation in partially unknown environments', IEEE IROS 2020. However, such a representation requires to know the waypoints in a global reference frame, hence, some way of establishing this reference frame is required. In a GPS-denied area, such as interiors of buildings, this requires a localization algorithm and a map to localize the robot in the environment.

It would be desirable to use an autonomous robot to carry out the scanning of the area of interest without the need of further user interaction after the definition of the areas of interest. It would also be desirable that the robot only scans the areas of interest.

It is therefore an object of the present invention to provide an improved method and system for generating 3D scan data of one or more areas of interest in an environment.

It is a further object to provide such a method and system that minimize the human effort, particularly that avoid the necessity for a human to move a scanner through the environment or to set-up a scanner at the one or more areas of interest.

It is a further object to provide such a method and system that minimize the time scanning the areas of interest, particularly to minimize the time for a mobile robot to identify user-defined areas of interest and to travel through the environment towards the areas of interest.

At least one of these objects is achieved by the method of claim 1, the system of claim 11, and/or the dependent claims of the present invention.

A first aspect of the present invention pertains to a method for generating three-dimensional scan data of one or more areas of interest in an environment. Said method comprises a user defining the one or more areas of interest using a mobile device in the environment, and a scanning device performing a scanning procedure at each defined area of interest to generate the scan data of the respective area of interest. Defining the areas of interest comprises, for each area of interest, generating identification data, which at least comprises generating image data of the respective area of interest. The scanning procedure at each defined area of interest is performed by a mobile robot comprising the scanning device and being configured for autonomously performing a scan of a surrounding area using the scanning device, the mobile robot having a SLAM functionality for simultaneous localization and mapping and being configured to autonomously move through the environment using the SLAM functionality. The identification data is provided to the mobile robot, and, in the course of each scanning procedure, the mobile robot navigates to the respective area of interest using the identification data, detects the respective area of interest using the identification data, and uses the scanning device to scan the respective area of interest to generate the three-dimensional scan data.

According to some embodiments of the method, generating the identification data comprises generating position data related to a determined position of the mobile device at the respective area of interest. The position of the mobile device is determined relative to the environment, e.g. relative to a local coordinate system of the environment, and/or relative to a global coordinate system, e.g. using GNSS data of a global navigation satellite system receiver of the mobile device. For instance, the determined position can be a position of the mobile device while capturing the image data.

According to some embodiments of the method, generating the identification data comprises generating pose data related to a pose of the mobile device while capturing the image data - for instance using IMU data of an inertial measuring unit of the mobile device - the pose comprising at least the attitude in three degrees-of-freedom.

According to some embodiments of the method, the mobile device tracks its path in the environment, and generating the identification data comprises generating path data related to the path of the mobile device. For instance, navigating to the respective area of interest may comprise using the path data, and/or the mobile robot may generate, based on the path information, a route for the mobile robot through the environment.

In one embodiment, tracking the path comprises using a SLAM functionality of the mobile device. For instance, for tracking the path the SLAM functionality of the mobile device may use at least one of IMU data of an inertial measuring unit of the mobile device, and image data continuously captured by at least one camera of the mobile device.

According to some embodiments of the method, the identification data is generated using environment data comprising at least one of image data, 2D data or 3D data of the environment. For instance, the environment data may be retrieved from an external data source, and/or may be used for determining a position of an area of interest based on the image data. Optionally, the image data may comprise depth information.

According to some embodiments of the method, the mobile robot has access to environment data comprising 3D data of the environment, wherein the mobile robot
- moves through the environment using the environment data and its SLAM functionality;
- navigates to the respective area of interest using the identification data and the environment data; and/or
- detects the areas of interest based on the identification data and the environment data.

The 3D data of the environment in particular may have a lower resolution than the scan data of the areas of interest.

According to some embodiments of the method, the mobile device comprises a display, at least one camera and an image-capturing functionality for generating, upon a trigger by the user of the mobile device and using the at least one camera, the image data. Optionally, also position data and/or pose data may be generated upon the trigger.

According to some embodiments of the method, the identification data is generated and provided to the mobile robot directly after generating the image data.

According to some embodiments of the method, the mobile robot starts a scanning procedure upon receiving the identification data.

According to some embodiments of the method, the image data comprises depth information. For instance, the mobile device comprises at least one time-of-flight camera and/or a 3D camera arrangement. In one embodiment, the identification data is generated using environment data comprising 3D data of the environment, wherein the environment data is used for determining a position of an area of interest based on the depth information; in another embodiment, the mobile robot detects the respective area of interest based on the depth information, for instance wherein the mobile robot comprises at least one time-of-flight camera and/or a 3D camera arrangement.

A second aspect of the invention pertains to a system for generating three-dimensional scan data of one or more areas of interest in an environment, e.g. according to the method of the first aspect, the system comprising a mobile device and a mobile robot. The mobile device comprises a camera for capturing images of the one or more areas of interest and for generating image data, and the mobile robot has a SLAM functionality for simultaneous localization and mapping and a scanning device for performing a scan at the one or more areas of interest and generating the scan data of the one or more areas of interest. The system is configured to generate, using at least the image data, identification data for each of the one or more areas of interest, the identification data allowing identifying the respective area of interest, and to provide the identification data to the mobile robot. The mobile robot is configured to autonomously
- move through the environment using the SLAM functionality;
- navigate to the areas of interest using the identification data;
- detect the areas of interest based on the identification data; and
- perform a scan at each of the one or more areas of interest to generate the three-dimensional scan data.

In some embodiments of the system, the scanning device comprises at least one laser scanner. In some embodiments, the scanning device comprises at least one structured-light scanner. In some embodiments, the scanning device comprises at least one time-of-flight camera.

In some embodiments of the system, the mobile robot is configured as a legged robot, comprising actuated legs for moving through the environment. In some embodiments, the mobile robot is configured as a wheeled robot, comprising actuated wheels for moving through the environment. In some embodiments, the mobile robot is configured as an unmanned aerial vehicle, e.g. a quadcopter, comprising actuated rotors for moving through the environment.

According to some embodiments of the system, the mobile device comprises a display, at least one camera and an image-capturing functionality for generating the image data upon a trigger by the user of the mobile device and using the at least one camera. In one embodiment, the image-capturing functionality is provided by a software application installed on the mobile device, wherein the display is configured as a touchscreen and the software application allows the user to mark an area in an image displayed on the display to define as an area of interest. In one embodiment, the mobile device comprises an inertial measuring unit, a compass and/or a GNSS receiver. In one embodiment, the at least one camera is configured as a time-of-flight camera and the image data comprises depth information. In one embodiment, the mobile device is configured for detecting a position of the mobile device while capturing the image data, and the system is configured to generate the identification data using position data related to the detected position. In one embodiment, the mobile device is configured for detecting a pose of the mobile device while capturing the image data, and the system is configured to generate the identification data using pose data related to the detected pose. In one embodiment, the mobile device is configured for tracking a path through the environment, e.g. using a SLAM functionality of the mobile device, IMU data of an inertial measuring unit of the mobile device, and/or image data continuously captured by the at least one camera, and the system is configured to generate the identification data using path data related to the path.

According to some embodiments of the system, the mobile robot is configured to receive environment data comprising 3D data of the environment, and the mobile robot is configured to autonomously move through the environment using the environment data and the SLAM functionality, to navigate to the areas of interest using the environment data and the determined positions, and/or to detect the areas of interest based on the image data and the 3D data, for instance wherein the image data comprises depth information.

According to some embodiments of the system, the mobile device comprises a SLAM functionality for simultaneous localization and mapping of the mobile device and is configured to track the path using the SLAM functionality. Optionally, for tracking the path the SLAM functionality uses IMU data of an inertial measuring unit of the mobile device, and/or image data continuously captured by at least one camera of the mobile device.

The invention in the following will be described in detail by referring to exemplary embodiments that are accompanied by figures, in which:
- Fig. 1: shows an exemplary environment with three areas of interest that a user wants to be scanned;
- Fig. 2: shows the user defining an area of interest by capturing image data thereof using a mobile device;
- Fig. 3: shows an exemplary of the mobile device;
- Fig. 4: shows a path of the user through the environment to capture image data of each of the three areas of interest;
- Fig. 5: shows a path of a mobile robot through the environment to scan each of the three areas of interest;
- Fig. 6: shows the mobile robot scanning the defined area of interest of Fig. 2;
- Fig. 7: illustrates the data generated and used during an exemplary embodiment of a method according to the invention; and
- Fig. 8: shows a flowchart illustrating an exemplary embodiment of a method according to the invention.

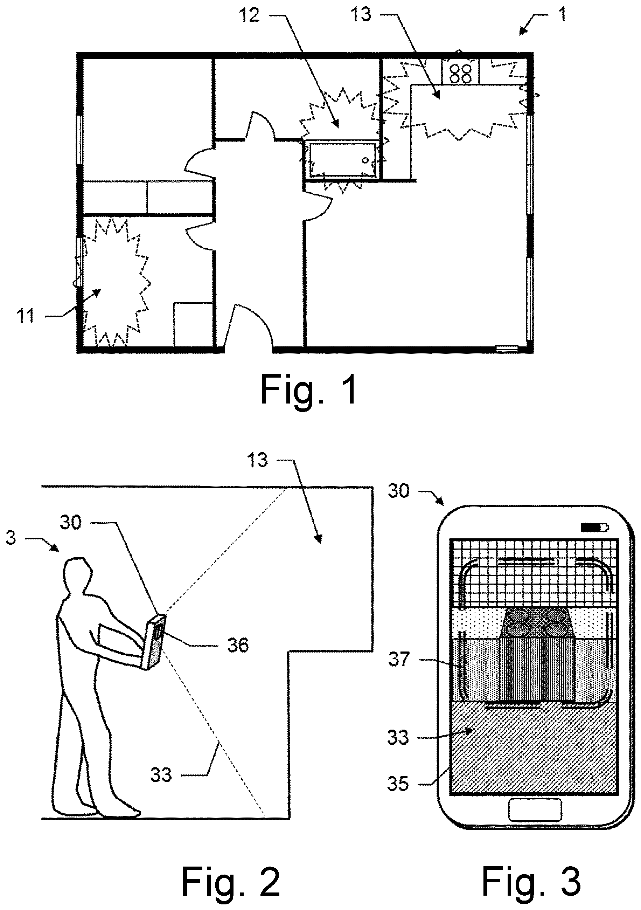

Figure 1 shows a layout of an apartment. The apartment is an example of an environment 1, in which there are areas of interest that a person would like to have scanned. In the shown example, there are three areas of interest 11, 12, 13. A first area of interest 11 is situated in a bedroom and comprises a wall including a window. A second area of interest 12 is situated in a bathroom and comprises appliances including a bathtub. A third area of interest 11 is situated in a combined kitchen and living room and comprises a built-in kitchen unit including a stove.

For instance, the window, the bathtub and the kitchen unit have recently been installed in the apartment, and an existing 3D model of the apartment needs to be updated with new 3D data of these areas. In this case, for instance, the person who would like to have the scans performed at the areas of interest may be a contractor or craftsman that have installed the applications or an owner of the apartment or an architect that have commissioned the installations. Alternatively, there is no 3D model of the environment 1, and only 3D data of the areas of interest 11, 12, 13 may be needed.

Conventionally, the person who would like to have the scans performed would haul a scanner through the apartment and place it at each area of interest to perform the scans. Alternatively, the person could define the areas of interest and then have someone else perform the scanning.

In the approach suggested by the present application, the areas of interest are specifically defined by a user of a mobile device. Data comprising identification information that allows identifying the defined areas is made available to a mobile robot that will perform the scans.

Figure 2 shows the user 3 of an exemplary embodiment of the mobile device 30 at the third area of interest 13 of the environment of Figure **1****.** The mobile device 30 has a camera 36 and is used by the user 3 to capture an image 33 of the area of interest 13.

Figure 3 shows the front side of the mobile device 30 of Figure **2****.** It comprises a display 35 and an image capturing functionality to capture images 33 of the areas of interest, thereby generating digital image data that may be provided to the mobile robot. The image may be captured upon receiving a trigger by the user. For instance, the trigger may comprise the user pushing a button of the mobile device or a digital button on the touch-sensitive display 35. Also a position of the mobile device may be determined and position data may be generated upon receiving the trigger. The identification data to be provided to the mobile robot may comprise the image data and the position data or be generated based on the image data and the position data.

Optionally, the user may define an area 37 in the image (e.g. using the touch-sensitive display 35) as the area of interest. Then, for instance, this information is included in the identification data. Alternatively, only the image data related to the user-defined area 37 in the image is included in generating the identification data.

The identification data needs to include data that allows the mobile robot to determine at least a rough position of each area of interest within the environment **1.** For instance, an absolute or relative position of the mobile device may be determined while capturing the image or a path to that position may be tracked. The identification data further needs to include data that allows the mobile robot to detect the area of interest at this rough position. In particular, this information may include the image data of the area of interest and/or pose data regarding a pose of the mobile device while capturing the image data. Alternatively, a precise position of the area of interest may be derived by comparing the image data and existing environment data.

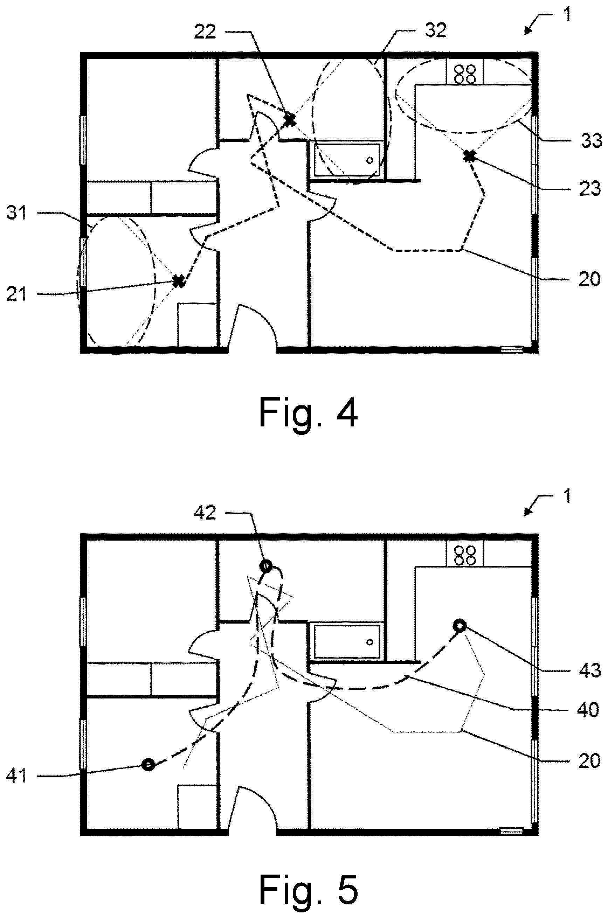

Figure 4 shows an exemplary path of the user of the mobile device through the environment **1.** The user captures a first image 31 of the first area of interest from a first position 21, then moves along a path 20 to a second position 22 to capture an image 32 of the second area of interest and finally moves along the path 20 to a third position 23 to capture an image 33 of the third area of interest.

While the user moves along the path 20, the mobile device may track this path and generate path information. For instance, tracking the path 20 may involve using one or more cameras and/or an inertial measuring unit (IMU) and a simultaneous localization and mapping (SLAM) functionality of the mobile device. Also, the mobile device may comprise a compass and/or a global navigation satellite system (GNSS) receiver that may be involved in tracking the path 20. The path information may be part of the identification data or used to generate the identification data for an area of interest, particularly path information relating to the path 20 from the previous area of interest.

The identification data of each area of interest may be generated and sent to the mobile robot directly after capturing the respective image. Alternatively, generating and/or sending the identification data may require a further user input, e.g. on the mobile device.

Figure 5 shows the scanning by the mobile robot 2 in the environment 1. The mobile robot 2 has a SLAM functionality for simultaneous localization and mapping that allows the mobile robot to autonomously move through the environment 1. The mobile robot uses the received identification data to autonomously navigate to the user-defined areas of interest.

In the shown example, having received the identification data of the three areas of interest, the mobile robot moves to a first scanning position 41 at the first area of interest and performs a first scan. Then, the mobile robot moves along a path 40 to a second scanning position 42 and to a third scanning position to perform a second and third scan.

The scanning positions are selected based on the received identification data. It is not necessary that the scanning position is the same as the position at which the image of the respective area of interest has been captured. Sometimes, it may be even necessary to use a different position for the scanning than for capturing the image.

By also using the information of the user's path 20, the robot can quickly navigate between interest points, as the planning required basically consists only of local obstacle avoidance. Furthermore, because of the user's selections, the robot is aware of what is important and does not spend time on places in which the user is not interested. Hence, the time-efficiency of the robot is also increased and can approach that of a teach-and-repeat workflow (where the "planning" is entirely up to the operator).

Another possibility is that if an environment model, **e.g. a** CAD model of the environment, is available, the robot can try to localize itself with respect to this model and do the same operations as if the CAD model was a previously recorded scan.

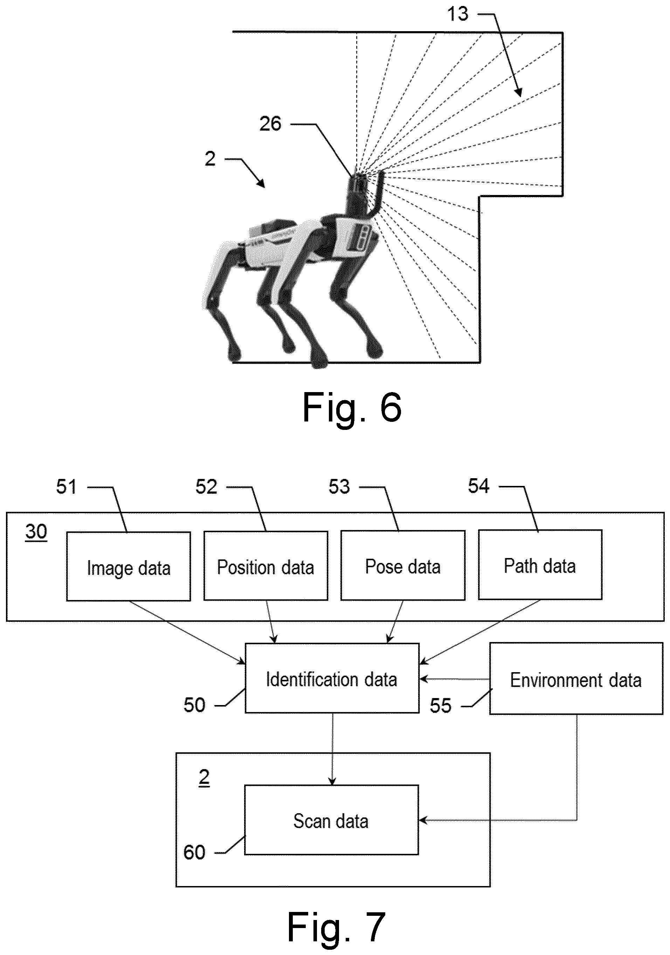

Figure 6 shows an exemplary embodiment of the mobile robot 2 at the third area of interest 13 of the environment of Figure **1****.** The mobile robot has a scanning device 26 to capture the 3D data of the area of interest 13.

For moving through the environment, the mobile robot may use different kinds of locomotion, each having its own advantages and disadvantages depending on the kind of environment. For instance, as shown here, the mobile robot 2 may be embodied as a legged robot, e.g. comprising four actuated legs. Alternatively, the robot 2 may be configured as a wheeled robot, i.e. comprising actuated wheels (and/or tracks), or as an unmanned aerial vehicle (UAV), particularly a quadcopter comprising actuated rotors.

The scanning device 26 of the mobile robot may comprise any suitable scanning means, in particular at least one laser scanner, at least one structured-light scanner, and/or at least one time-of-flight camera.

Figure 7 illustrates the generation, use and flow of data within an exemplary embodiment of a system according to the invention while performing an exemplary embodiment of a method according to the invention. The mobile device 30 captures image data 51 of the area of interest and optionally further data, such as position data 52 and pose data 53 related to a position and pose of the device 30 while capturing the image data 51. The mobile device 30 may also generate path data 54 from tracking a path to the area of interest. Also, the image data 51 may comprise RGB and depth information.

This data 51, 52, 53, 54 captured by the mobile device 30 is used to generate identification data 50 that will be provided to the mobile robot 2. Generating the identification data 50 may be done on the mobile device 30 or on an external computing unit of the system. It may comprise using existing environment data 55 of the environment. This may comprise 2D, 3D or image data of the environment.

The mobile robot 2 receives the identification data 50, identifies the area of interest and generates the scan data 60 of the area of interest. For facilitating identification of the area of interest, the mobile robot optionally may use existing environment data 55 of the environment.

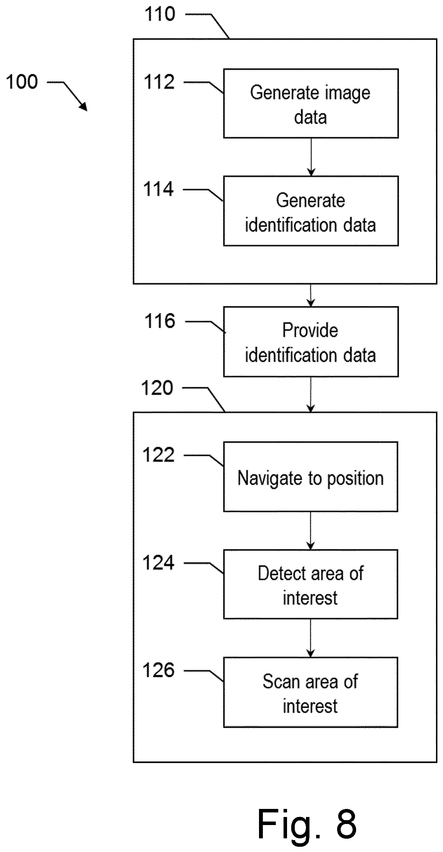

Figure 8 shows a flow chart illustrating an exemplary embodiment of a method 100 according to the invention. The approach of the described method 100 allows to efficiently operate and not spend time on areas that are not of particular interest. Also, it includes the advantage of a teach-and-repeat workflow which allows the robot to quickly navigate as it has a strong prior on the path it can take (i.e. the user's trajectory). The approach can be seen as a sort of a teach-and-repeat workflow with additional information added, namely the areas of interest defined by the user. Therefore, it can be placed between a fully autonomous exploration and a simple path following algorithm.

As shown here, the approach consists of two stages. In a first stage (definition stage 110), a user, using a mobile device, takes images of areas of interest, e.g. those places that should be scanned thoroughly. The mobile device captures the images, thus generating 112 image data of the areas of interest. Optionally, the mobile device also captures other data, e.g. regarding a position or pose of the device while capturing the image. For instance, the device may record the user's motion by means of an odometry system (e.g. ARKit, ARCore) to determine a trajectory between two areas of interest. Based on the image data and the other data, identification data is generated 114 and provided 116 to the mobile robot.

In a second stage (scanning stage 120), the mobile robot identifies the areas of interest based on the images taken by the user and references itself relative to the position of the mobile device when taking the image.

The scanning stage 120 comprises the robot using the identification data 50 to autonomously navigate 122 towards the respective area of interest and to detect 124 the respective area of interest. Optionally, in order to efficiently navigate between the areas of interest, the robot may use the user's trajectory as a basis for its own path planning. Then, the robot uses its scanning device to scan 126 the area of interest to generate the three-dimensional scan data.

During the first stage 110, the user can use a large variety of lightweight devices (almost any modern smartphone/tablet), which allows to quickly go through the scene and select (define) the areas of interest. A software application ("app") may be installed on the mobile device that automatically provides the captured data (or identification data that is generated based on the captured data) to the mobile robot - either directly or via a server computer. The app may also automatically track the user's movement between two areas of interest. Optionally, the app may also receive a user input, e.g. on a touchscreen of the mobile device, to define the area of interest more precisely in the captured image.

Furthermore, in order to do this, the robot performing the scanning does not need to be on-sight at the time of capturing the data. Hence, one can make efficient use of resources, e.g. the expert can visit multiple sites in a short time and is not bound to having the infrastructure (i.e. the robot) in place at the time of his visit.

## Claims

1. Method (100) for generating three-dimensional scan data (60) of one or more areas of interest (11, 12, 13) in an environment (1), the method comprising
- a user (3) defining (110) the one or more areas of interest (11, 12, 13) using a mobile device (30) in the environment (1); and
- a scanning device (26) performing a scanning procedure (120) at each defined area of interest (11, 12, 13) to generate the scan data (60) of the respective area of interest,
- defining (110) the areas of interest (11, 12, 13) comprises, for each area of interest,
generating (114) identification data (50), wherein generating the identification data at least comprises generating (112) image data (51) of the respective area of interest; and
- the scanning procedure (120) at each defined area of interest (11, 12, 13) is performed by a mobile robot (2) comprising the scanning device (26) and being configured for autonomously performing a scan of a surrounding area using the scanning device (26), the mobile robot (2) having a SLAM functionality for simultaneous localization and mapping and being configured to autonomously move through the environment (1) using the SLAM functionality,
wherein the identification data (50) is provided (116) to the mobile robot (2), and, in the course of each scanning procedure (120), the mobile robot (2)
- navigates (122) to the respective area of interest (11, 12, 13) using the identification data (50);
- detects (124) the respective area of interest (11, 12, 13) using the identification data (50); and
- uses the scanning device (26) to scan (126) the respective area of interest (11, 12, 13) to generate the three-dimensional scan data (60).

2. Method (100) according to claim 1, wherein generating (112) the identification data (50) comprises generating position data (52) related to a determined position (21, 22, 23) of the mobile device (30) at the respective area of interest, particularly wherein the position (21, 22, 23) is a position of the mobile device (30) while capturing the image data (51), wherein the position (21, 22, 23) of the mobile device (30) is determined
- relative to the environment (1), particularly relative to a local coordinate system of the environment, and/or
- relative to a global coordinate system, particularly using GNSS data of an global navigation satellite system receiver of the mobile device (30).

3. Method (100) according to claim 1 or claim 2, wherein generating (112) the identification data (50) comprises generating pose data (53) related to a pose of the mobile device (30) while capturing the image data (51), particularly using IMU data of an inertial measuring unit of the mobile device (30), the pose comprising at least the attitude in three degrees-of-freedom.

4. Method (100) according to any one of the preceding claims, wherein the mobile device (30) tracks its path (20) in the environment (1) and generating (112) the identification data (50) comprises generating path data (54) related to the path (20) of the mobile device (30), particularly wherein
- navigating (122) to the respective area of interest comprises using the path data; and/or
- the mobile robot (2) generates, based on the path information, a route (40) for the mobile robot (2) through the environment (1).

5. Method (100) according to claim 4, wherein tracking the path (20) comprises using a SLAM functionality of the mobile device (30), particularly wherein for tracking the path (20) the SLAM functionality of the mobile device (30) uses at least one of
- IMU data of an inertial measuring unit of the mobile device (30), and
- image data continuously captured by at least one camera (36) of the mobile device (30).

6. Method (100) according to any one of the preceding claims, wherein the identification data (50) is generated (112) using environment data (55) comprising at least one of image data, 2D data or 3D data of the environment (1), particularly wherein the environment data (55)
- is retrieved from an external data source; and/or
- is used for determining a position of an area of interest based on the image data (51), in particular wherein the image data (51) comprises depth information.

7. Method (100) according to any one of the preceding claims, wherein the mobile robot (2) has access to environment data (55) comprising 3D data of the environment (1), wherein the mobile robot (2)
- moves through the environment (1) using the environment data (55) and its SLAM functionality;
- navigates (122) to the respective area of interest (11, 12, 13) using the identification data (50) and the environment data (55); and/or
- detects (124) the areas of interest (11, 12, 13) based on the identification data (50) and the environment data (55),
particularly wherein the 3D data of the environment (1) has a lower resolution than the scan data of the areas of interest.

8. Method (100) according to any one of the preceding claims, wherein the mobile device (30) comprises a display (35), at least one camera (36) and an image-capturing functionality for generating, upon a trigger by the user (3) of the mobile device (30) and using the at least one camera (36), the image data (51), particularly wherein also position data (52) and/or pose data (53) is generated (114) upon the trigger.

9. Method (100) according to any one of the preceding claims, wherein
- the identification data (50) is generated (114) and provided (116) to the mobile robot (2) directly after generating the image data (51); and/or
- the mobile robot (2) starts a scanning procedure (120) upon receiving the identification data (50).

10. Method (100) according to any one of the preceding claims, wherein the image data (51) comprises depth information, particularly wherein the mobile device (30) comprises at least one time-of-flight camera and/or a 3D camera arrangement, wherein
- the identification data (50) is generated (112) using environment data (55) comprising 3D data of the environment (1), wherein the environment data (55) is used for determining a position of an area of interest based on the depth information;
and/or
- the mobile robot detects (124) the respective area of interest (11, 12, 13) based on the depth information, particularly wherein the mobile robot (2) comprises at least one time-of-flight camera and/or a 3D camera arrangement.

11. System for generating three-dimensional scan data (60) of one or more areas of interest (11, 12, 13) in an environment (1), particularly according to the method (100) of any one of the preceding claims, the system comprising a mobile device (30) and a mobile robot (2), wherein
- the mobile device (30) comprises a camera (36) for capturing images of the one or more areas of interest (11, 12, 13) and for generating image data (51), and
- the mobile robot (2) has a SLAM functionality for simultaneous localization and mapping and a scanning device (26) for performing a scan at the one or more areas of interest (11, 12, 13) and generating the scan data (60) of the one or more areas of interest (11, 12, 13),
the system is configured to generate (114), using at least the image data (51), identification data (50) for each of the one or more areas of interest (11, 12, 13), the identification data (50) allowing identifying the respective area of interest, and to provide the identification data (50) to the mobile robot (2), wherein the mobile robot (2) is configured to autonomously
- move through the environment (1) using the SLAM functionality;
- navigate (122) to the areas of interest (11, 12, 13) using the identification data (50);
- detect (124) the areas of interest (11, 12, 13) based on the identification data (50); and
- perform a scan (126) at each of the one or more areas of interest (11, 12, 13) to generate the three-dimensional scan data (60).

12. System according to claim 11,
wherein the scanning device (26) comprises
- at least one laser scanner,
- at least one structured-light scanner, and/or
- at least one time-of-flight camera; and/or
wherein the mobile robot (2) is configured as
- a legged robot, comprising actuated legs for moving through the environment (1),
- a wheeled robot, comprising actuated wheels for moving through the environment (1), and/or
- an unmanned aerial vehicle, particularly a quadcopter, comprising actuated rotors for moving through the environment (1).

13. System according to claim 11 or claim 12, wherein the mobile device (30) comprises a display (35), at least one camera (36) and an image-capturing functionality for generating, upon a trigger by the user (3) of the mobile device (30) and using the at least one camera (36), the image data (51), particularly wherein
- the image-capturing functionality is provided by a software application installed on the mobile device (30), wherein the display (35) is configured as a touchscreen and the software application allows the user (3) to mark an area (37) in an image (33) displayed on the display (35) to define as an area of interest (11, 12, 13);
- the mobile device (30) comprises an inertial measuring unit, a compass and/or a GNSS receiver;
- the at least one camera (36) is configured as a time-of-flight camera and the image data (51) comprises depth information;
- the mobile device (30) is configured for detecting a position (21, 22, 23) of the mobile device (30) while capturing the image data (51), and the system is configured to generate (114) the identification data (50) using position data (52) related to the detected position (21, 22, 23);
- the mobile device (30) is configured for detecting a pose of the mobile device (30) while capturing the image data (51), and the system is configured to generate (114) the identification data (50) using pose data (53) related to the detected pose; and/or
- the mobile device (30) is configured for tracking a path (20) through the environment (1), particularly using a SLAM functionality of the mobile device (30), IMU data of an inertial measuring unit of the mobile device (30), and/or image data continuously captured by the at least one camera (36), and the system is configured to generate (114) the identification data (50) using path data (54) related to the path (20).

14. System according to any one of claims 11 to 13, wherein the mobile robot is configured to receive environment data (55) comprising 3D data of the environment (1), and is configured to autonomously
- move through the environment (1) using the environment data (55) and the SLAM functionality;
- navigate to the areas of interest (11, 12, 13) using the environment data (55) and the determined positions (21, 22, 23); and/or
- detect the areas of interest (11, 12, 13) based on the image data and the 3D data, particularly wherein the image data comprises depth information.

15. System according to any one of claims 11 to 14, wherein the mobile device (30) comprises a SLAM functionality for simultaneous localization and mapping of the mobile device (30) and is configured to track the path using the SLAM functionality, particularly wherein for tracking the path (20) the SLAM functionality uses
- IMU data of an inertial measuring unit of the mobile device (30), and/or
- image data continuously captured by at least one camera of the mobile device (30).

## Patentansprüche

1. Verfahren (100) zum Erzeugen von dreidimensionalen Scandaten (60) von einem oder mehreren Bereichen von Interesse (11, 12, 13) in einer Umgebung (1), wobei das Verfahren umfasst
- einen Benutzer (3), der unter Verwendung einer mobilen Vorrichtung (30) in der Umgebung (1) den einen oder die mehreren Bereiche von Interesse (11, 12, 13) definiert (110); und
- eine Scanvorrichtung (26), die einen Scanvorgang (120) an jedem definierten Bereich von Interesse (11, 12, 13) ausführt, um die Scandaten (60) des entsprechenden Bereichs von Interesse zu erzeugen,
- wobei das Definieren (110) der Bereiche von Interesse (11, 12, 13) für jeden Bereich von Interesse das Erzeugen (114) von Identifikationsdaten (50) umfasst, wobei das Erzeugen der Identifikationsdaten mindestens das Erzeugen (112) von Bilddaten (51) des entsprechenden Bereichs von Interesse umfasst; und
- der Scanvorgang (120) in jedem definierten Bereich von Interesse (11, 12, 13) von einem mobilen Roboter (2) ausgeführt wird, der die Scanvorrichtung (26) umfasst und eingerichtet ist, unter Verwendung der Scanvorrichtung (26) einen Scan eines Umgebungsbereichs autonom auszuführen, wobei der mobile Roboter (2) eine SLAM-Funktionalität zur gleichzeitigen Lokalisierung und Abbildung aufweist und eingerichtet ist, sich unter Verwendung der SLAM-Funktionalität autonom durch die Umgebung (1) zu bewegen,
wobei die Identifikationsdaten (50) an den mobilen Roboter (2) bereitgestellt werden (116) und der mobile Roboter (2) im Verlauf von jedem Scanvorgang (120)
- unter Verwendung der Identifikationsdaten (50) zu dem entsprechenden Bereich von Interesse (11, 12, 13) navigiert (122);
- den entsprechenden Bereich von Interesse (11, 12, 13) unter Verwendung der Identifikationsdaten (50) detektiert (124); und
- unter Verwendung der Scanvorrichtung (26) den entsprechenden Bereich von Interesse (11, 12, 13) scannt (126), um die dreidimensionalen Scandaten (60) zu erzeugen.

2. Verfahren (100) nach Anspruch 1, wobei das Erzeugen (112) der Identifikationsdaten (50) das Erzeugen von Positionsdaten (52) in Bezug auf eine bestimmte Position (21, 22, 23) der mobilen Vorrichtung (30) in dem entsprechenden Bereich von Interesse umfasst, wobei die Position (21, 22, 23) insbesondere eine Position der mobilen Vorrichtung (30) ist, während die Bilddaten (51) erfasst werden, wobei die Position (21, 22, 23) der mobilen Vorrichtung (30) bestimmt wird
- relativ zu der Umgebung (1), insbesondere relativ zu einem lokalen Koordinatensystem der Umgebung,
und/oder
- relativ zu einem globalen Koordinatensystem, insbesondere unter Verwendung von GNSS-Daten eines Satellitennavigationssystemempfängers der mobilen Vorrichtung (30).

3. Verfahren (100) nach Anspruch 1 oder Anspruch 2, wobei das Erzeugen (112) der Identifikationsdaten (50) das Erzeugen von Pose-Daten (53) in Bezug auf eine Pose der mobilen Vorrichtung (30) beim Erfassen der Bilddaten (51) insbesondere unter Verwendung von IMU-Daten einer Inertialmesseinheit der mobilen Vorrichtung (30) umfasst, wobei die Pose mindestens die Stellung in drei Freiheitsgraden umfasst.

4. Verfahren (100) nach einem der vorstehenden Ansprüche, wobei die mobile Vorrichtung (30) ihren Weg (20) in der Umgebung (1) verfolgt und das Erzeugen (112) der Identifikationsdaten (50) das Erzeugen von Wegdaten (54) in Bezug auf den Weg (20) der mobilen Vorrichtung (30) umfasst, wobei insbesondere
- das Navigieren (122) zu dem entsprechenden Bereich von Interesse das Verwenden der Wegdaten umfasst;
und/oder
- der mobile Roboter (2) basierend auf den Weginformationen eine Route (40) für den mobilen Roboter (2) durch die Umgebung (1) erzeugt.

5. Verfahren (100) nach Anspruch 4, wobei das Verfolgen des Wegs (20) das Verwenden einer SLAM-Funktionalität der mobilen Vorrichtung (30) umfasst, wobei die SLAM-Funktionalität der mobilen Vorrichtung (30) zum Verfolgen des Wegs (20) insbesondere mindestens eines verwendet von
- IMU-Daten einer Inertialmesseinheit der mobilen Vorrichtung (30) und
- Bilddaten, die von mindestens einer Kamera (36) der mobilen Vorrichtung (30) kontinuierlich erfasst werden.

6. Verfahren (100) nach einem der vorstehenden Ansprüche, wobei die Identifikationsdaten (50) unter Verwendung von Umgebungsdaten (55) erzeugt (112) werden, die mindestens eines von Bilddaten, 2D-Daten oder 3D-Daten der Umgebung (1) umfassen, wobei insbesondere die Umgebungsdaten (55)
- von einer externen Datenquelle abgerufen werden;
und/oder
- zum Bestimmen einer Position eines Bereichs von Interesse basierend auf den Bilddaten (51) verwendet werden, wobei insbesondere die Bilddaten (51) Tiefeninformationen umfassen.

7. Verfahren (100) nach einem der vorstehenden Ansprüche, wobei der mobile Roboter (2) Zugriff auf Umgebungsdaten (55) hat, die 3D-Daten der Umgebung (1) umfassen, wobei der mobile Roboter (2)
- sich unter Verwendung der Umgebungsdaten (55) und seiner SLAM-Funktionalität durch die Umgebung (1) bewegt;
- unter Verwendung der Identifikationsdaten (50) und der Umgebungsdaten (55) zu dem entsprechenden Bereich von Interesse (11, 12, 13) navigiert (122); und/oder
- die Bereiche von Interesse (11, 12, 13) basierend auf den Identifikationsdaten (50) und den Umgebungsdaten (55) detektiert (124),
wobei insbesondere die 3D-Daten der Umgebung (1) eine geringere Auflösung aufweisen als die Scandaten der Bereiche von Interesse.

8. Verfahren (100) nach einem der vorstehenden Ansprüche, wobei die mobile Vorrichtung (30) ein Display (35), mindestens eine Kamera (36) und eine Bilderfassungsfunktionalität umfasst, um bei einem Auslösevorgang durch den Benutzer (3) der mobilen Vorrichtung (30) und unter Verwendung der mindestens einen Kamera (36) die Bilddaten (51) zu erzeugen, wobei insbesondere bei dem Auslösevorgang auch Positionsdaten (52) und/oder Pose-Daten (53) erzeugt (114) werden.

9. Verfahren (100) nach einem der vorstehenden Ansprüche, wobei
- die Identifikationsdaten (50) unmittelbar nach dem Erzeugen der Bilddaten (51) erzeugt (114) und dem mobilen Roboter (2) bereitgestellt (116) werden;
und/oder
- der mobile Roboter (2) nach Empfang der Identifikationsdaten (50) einen Scanvorgang (120) startet.

10. Verfahren (100) nach einem der vorstehenden Ansprüche, wobei die Bilddaten (51) Tiefeninformationen umfassen, wobei insbesondere die mobile Vorrichtung (30) mindestens eine Time-of-Flight-Kamera und/oder eine 3D-Kameraanordnung umfasst, wobei
- die Identifikationsdaten (50) unter Verwendung von Umgebungsdaten (55), die 3D-Daten der Umgebung (1) umfassen, erzeugt werden (112), wobei die Umgebungsdaten (55) zum Bestimmen einer Position eines Bereichs von Interesse basierend auf den Tiefeninformationen verwendet werden; und/oder
- der mobile Roboter den entsprechenden Bereich von Interesse (11, 12, 13) basierend auf den Tiefeninformationen detektiert (124), wobei der mobile Roboter (2) insbesondere mindestens eine Time-of-Flight-Kamera und/oder eine 3D-Kameraanordnung umfasst.

11. System zum Erzeugen dreidimensionaler Scandaten (60) von einem oder mehreren Bereichen von Interesse (11, 12, 13) in einer Umgebung (1) insbesondere gemäß dem Verfahren (100) nach einem der vorstehenden Ansprüche, wobei das System eine mobile Vorrichtung (30) und einen mobilen Roboter (2) umfasst, wobei
- die mobile Vorrichtung (30) eine Kamera (36) zum Erfassen von Bildern von dem einen oder den mehreren Bereichen von Interesse (11, 12, 13) und zum Erzeugen von Bilddaten (51) umfasst und
- der mobile Roboter (2) eine SLAM-Funktionalität zur gleichzeitigen Lokalisierung und Abbildung und eine Scanvorrichtung (26) zum Ausführen eines Scans an dem einen oder den mehreren Bereichen von Interesse (11, 12, 13) und zum Erzeugen der Scandaten (60) des einen oder der mehreren Bereiche von Interesse (11, 12, 13) aufweist,
das System eingerichtet ist, unter Verwendung von mindestens den Bilddaten (51) Identifikationsdaten (50) für jeden von dem einen oder den mehreren Bereichen von Interesse (11, 12, 13) zu erzeugen (114), wobei die Identifikationsdaten (50) das Identifizieren des entsprechenden Bereichs von Interesse ermöglichen, und die Identifikationsdaten (50) an den mobilen Roboter (2) bereitzustellen, wobei der autonom mobile Roboter (2) eingerichtet ist,
- sich unter Verwendung der SLAM-Funktionalität durch die Umgebung (1) zu bewegen;
- zu den Bereichen von Interesse (11, 12, 13) unter Verwendung der Identifikationsdaten (50) zu navigieren (122);
- die Bereiche von Interesse (11, 12, 13) basierend auf den Identifikationsdaten (50) zu detektieren (124); und
- einen Scan (126) an jedem von dem einen oder den mehreren Bereichen von Interesse (11, 12, 13) auszuführen, um die dreidimensionalen Scandaten (60) zu erzeugen.

12. System nach Anspruch 11,
wobei die Scanvorrichtung (26) umfasst
- mindestens einen Laserscanner,
- mindestens einen Streifenlichtscanner und/oder
- mindestens eine Time-of-Flight-Kamera; und/oder
wobei der mobile Roboter (2) eingerichtet ist als
- ein Laufroboter, der betätigte Beine zur Bewegung durch die Umgebung (1) umfasst,
- ein Radroboter, der betätigte Räder zur Bewegung durch die Umgebung (1) umfasst, und/oder
- ein unbemanntes Luftfahrzeug und insbesondere einen Quadcopter, der betätigte Rotoren zur Bewegung durch die Umgebung (1) umfasst.

13. System nach Anspruch 11 oder Anspruch 12, wobei die mobile Vorrichtung (30) ein Display (35), mindestens eine Kamera (36) und eine Bilderfassungsfunktionalität umfasst, um bei einem Auslösevorgang durch den Benutzer (3) der mobilen Vorrichtung (30) und unter Verwendung der mindestens einen Kamera (36) die Bilddaten (51) zu erzeugen, wobei insbesondere
- die Bilderfassungsfunktionalität durch eine auf der mobilen Vorrichtung (30) installierte Softwareanwendung bereitgestellt wird, wobei das Display (35) als ein Touchscreen eingerichtet ist und die Softwareanwendung es dem Benutzer (3) ermöglicht, einen Bereich (37) in einem auf dem Display (35) angezeigten Bild (33) zu markieren, um ihn als einen Bereich von Interesse (11, 12, 13) zu definieren;
- die mobile Vorrichtung (30) eine Inertialmesseinheit, einen Kompass und/oder einen GNSS-Empfänger umfasst;
- die mindestens eine Kamera (36) als eine Time-of-Flight-Kamera eingerichtet ist und die Bilddaten (51) Tiefeninformationen umfassen;
- die mobile Vorrichtung (30) eingerichtet ist, eine Position (21, 22, 23) der mobilen Vorrichtung (30) beim Erfassen der Bilddaten (51) zu detektieren, und das System eingerichtet ist, die Identifikationsdaten (50) unter Verwendung von Positionsdaten (52) in Bezug auf die detektierte Position (21, 22, 23) zu erzeugen (114);
- die mobile Vorrichtung (30) eingerichtet ist, eine Pose der mobilen Vorrichtung (30) beim Erfassen der Bilddaten (51) zu detektieren, und das System eingerichtet ist, die Identifikationsdaten (50) unter Verwendung von Pose-Daten (53) in Bezug auf die detektierte Pose zu erzeugen (114); und/oder
- die mobile Vorrichtung (30) eingerichtet ist, einen Weg (20) durch die Umgebung (1) insbesondere unter Verwendung einer SLAM-Funktionalität der mobilen Vorrichtung (30), von IMU-Daten einer Inertialmesseinheit der mobilen Vorrichtung (30) und/oder von der mindestens einen Kamera (36) kontinuierlich erfassten Bilddaten zu verfolgen, und das System eingerichtet ist, die Identifikationsdaten (50) unter Verwendung von Wegdaten (54) in Bezug auf den Weg (20) zu erzeugen (114).

14. System nach einem der Ansprüche 11 bis 13, wobei der mobile Roboter eingerichtet ist, Umgebungsdaten (55) zu empfangen, die 3D-Daten der Umgebung (1) umfassen, und eingerichtet ist, autonom
- sich unter Verwendung der Umgebungsdaten (55) und der SLAM-Funktionalität durch die Umgebung (1) zu bewegen;
- unter Verwendung der Umgebungsdaten (55) und der bestimmten Positionen (21, 22, 23) zu den Bereichen von Interesse (11, 12, 13) zu navigieren; und/oder
- die Bereiche von Interesse (11, 12, 13) basierend auf den Bilddaten und den 3D-Daten zu detektieren, wobei die Bilddaten insbesondere Tiefeninformationen umfassen.

15. System nach einem der Ansprüche 11 bis 14, wobei die mobile Vorrichtung (30) eine SLAM-Funktionalität zur gleichzeitigen Lokalisierung und Abbildung der mobilen Vorrichtung (30) umfasst und eingerichtet ist, den Weg unter Verwendung der SLAM-Funktionalität zu verfolgen, wobei insbesondere die SLAM-Funktionalität zur Verfolgung des Wegs (20)
- IMU-Daten einer Inertialmesseinheit der mobilen Vorrichtung (30) und/oder
- Bilddaten, die von mindestens einer Kamera der mobilen Vorrichtung (30) kontinuierlich erfasst werden, verwendet.

## Revendications

1. Procédé (100) de génération de données de balayage tridimensionnel (60) d'une ou plusieurs zones d'intérêt (11, 12, 13) dans un environnement (1), ledit procédé comprenant les étapes suivantes :
- un utilisateur (3) définit (110) la ou les zones d'intérêt (11, 12, 13) au moyen d'un appareil mobile (30) dans l'environnement (1), et
- un dispositif de balayage (26) effectue une procédure de balayage (120) dans chaque zone d'intérêt (11, 12, 13) définie afin de générer les données de balayage (60) concernant la zone d'intérêt considérée ;
- la définition (110) des zones d'intérêt (11, 12, 13) comprenant la génération (114) de données d'identification (50) pour chaque zone d'intérêt, ladite génération de données d'identification comprenant au moins la génération (112) de données d'image (51) concernant la zone d'intérêt considérée, et
- la procédure de balayage (120) menée dans chaque zone d'intérêt (11, 12, 13) définie étant effectuée par un robot mobile (2) qui comprend ledit dispositif de balayage (26) et qui est conçu pour effectuer de manière autonome un balayage d'une zone environnante au moyen dudit dispositif de balayage (26), ledit robot mobile (2) possédant une fonctionnalité SLAM de localisation et cartographie simultanées et étant conçu pour se déplacer de manière autonome à travers l'environnement (1) en utilisant ladite fonctionnalité SLAM,
sachant que les données d'identification (50) sont fournies (116) au robot mobile (2) et que, au cours de chaque procédure de balayage (120), le robot mobile (2)
- navigue (122) jusqu'à la zone d'intérêt (11, 12, 13) considérée en utilisant lesdites données d'identification (50),
- détecte (124) la zone d'intérêt (11, 12, 13) considérée en utilisant lesdites données d'identification (50), et
- utilise le dispositif de balayage (26) pour balayer (126) la zone d'intérêt (11, 12, 13) considérée afin de générer les données de balayage tridimensionnel (60).

2. Procédé (100) selon la revendication 1, dans lequel la génération (112) des données d'identification (50) comprend la génération de données de position (52) relatives à une position déterminée (21, 22, 23) de l'appareil mobile (30) dans la zone d'intérêt considérée, la position (21, 22, 23) étant notamment la position adoptée par l'appareil mobile (30) lors de l'acquisition des données d'image (51), la position (21, 22, 23) de l'appareil mobile (30) étant déterminée
- relativement à l'environnement (1), notamment à un système de coordonnées local de l'environnement, et/ou
- relativement à un système de coordonnées global, notamment au moyen de données GNSS *(global navigation satellite system,* système de positionnement par satellites) d'un récepteur GNSS de l'appareil mobile (30).

3. Procédé (100) selon la revendication 1 ou 2, dans lequel la génération (112) des données d'identification (50) comprend la génération de données de pose (53) relatives à la pose adoptée par l'appareil mobile (30) lors de l'acquisition des données d'image (51), notamment au moyen de données IMU d'une IMU (*inertial measuring unit,* centrale inertielle) de l'appareil mobile (30), ladite pose comprenant au moins l'assiette selon trois degrés de liberté.

4. Procédé (100) selon l'une quelconque des revendications précédentes, dans lequel l'appareil mobile (30) suit son chemin (20) dans l'environnement (1) et la génération (112) des données d'identification (50) comprend la génération de données de chemin (54) relatives au chemin (20) de l'appareil mobile (30), procédé dans lequel notamment
- la navigation (122) jusqu'à la zone d'intérêt considérée comprend l'utilisation desdites données de chemin, et/ou
- le robot mobile (2) génère, compte tenu des données de chemin, un itinéraire (40) propre audit robot mobile (2) à travers l'environnement (1).

5. Procédé (100) selon la revendication 4, dans lequel le suivi du chemin (20) comprend l'utilisation d'une fonctionnalité SLAM de l'appareil mobile (30), ladite fonctionnalité SLAM de l'appareil mobile (30) utilisant notamment, pour suivre le chemin (20) :
- des données **IMU** d'une centrale inertielle de l'appareil mobile (30), et/ou
- des données d'image acquises en continu par au moins une caméra (36) de l'appareil mobile (30).

6. Procédé (100) selon l'une quelconque des revendications précédentes, dans lequel les données d'identification (50) sont générées (112) au moyen de données d'environnement (55) comprenant des données d'image, des données 2D et/ou des données 3D de l'environnement (1), lesdites données d'environnement (55) étant notamment
- récupérées d'une source de données externe, et/ou
- utilisées pour déterminer la position d'une zone d'intérêt compte tenu des données d'image (51), lesdites données d'image (51) comprenant notamment des informations de profondeur.

7. Procédé (100) selon l'une quelconque des revendications précédentes, dans lequel le robot mobile (2) a accès à des données d'environnement (55) comprenant des données 3D de l'environnement (1), procédé dans lequel ledit robot mobile (2)
- se déplace à travers l'environnement (1) en utilisant les données d'environnement (55) et sa fonctionnalité SLAM,
- navigue (122) jusqu'à la zone d'intérêt (11, 12, 13) considérée en utilisant lesdites données d'identification (50) et les données d'environnement (55),
et/ou
- détecte (124) les zones d'intérêt (11, 12, 13) compte tenu desdites données d'identification (50) et desdites données d'environnement (55),
les données 3D de l'environnement (1) présentant notamment une résolution plus faible que les données de balayage des zones d'intérêt (11, 12, 13).

8. Procédé (100) selon l'une quelconque des revendications précédentes, dans lequel l'appareil mobile (30) comprend un écran (35), au moins une caméra (36) et une fonctionnalité d'acquisition d'image permettant de générer les données d'image (51), sur déclenchement de l'appareil mobile (30) par l'utilisateur (3) et au moyen de l'au moins une caméra (36), procédé dans lequel notamment des données de position (52) et/ou des données de pose (53) sont aussi générées (114) lors dudit déclenchement.

9. Procédé (100) selon l'une quelconque des revendications précédentes, dans lequel
- les données d'identification (50) sont générées (114) et directement fournies (116) au robot mobile (2) après la génération des données d'image (51),
et/ou
- le robot mobile (2) entame une procédure de balayage (120) lorsqu'il reçoit les données d'identification (50).

10. Procédé (100) selon l'une quelconque des revendications précédentes, dans lequel les données d'image (51) comprennent des informations de profondeur, notamment dans lequel l'appareil mobile (30) comprend au moins une caméra temps de vol et/ou un dispositif formant caméra 3D, et dans lequel
- les données d'identification (50) sont générées (112) au moyen de données d'environnement (55) comprenant des données 3D de l'environnement (1), lesdites données d'environnement (55) servant à déterminer la position d'une zone d'intérêt compte tenu des informations de profondeur, et/ou
- le robot mobile détecte (124) la zone d'intérêt (11, 12, 13) considérée compte tenu des informations de profondeur, le robot mobile (2) comprenant notamment au moins une caméra temps de vol et/ou un dispositif formant caméra 3D.

11. Système de génération de données de balayage tridimensionnel (60) d'une ou plusieurs zones d'intérêt (11, 12, 13) dans un environnement (1), notamment suivant le procédé (100) selon l'une quelconque des revendications précédentes, ledit système comprenant un appareil mobile (30) et un robot mobile (2), système dans lequel
- l'appareil mobile (30) comprend une caméra (36) permettant d'acquérir des images de la ou des zones d'intérêt (11, 12, 13) et de générer des données d'image (51), et
- le robot mobile (2) possède une fonctionnalité SLAM de localisation et cartographie simultanées et un dispositif de balayage (26) pour effectuer un balayage de la ou des zones d'intérêt (11, 12, 13) et générer les données de balayage (60) de la ou des zones d'intérêt (11, 12, 13),
le système est conçu pour générer (114) des données d'identification (50) pour la ou chacune des zones d'intérêt (11, 12, 13) à partir d'au moins les données d'image (51), lesdites données d'identification (50) permettant d'identifier la zone d'intérêt considérée, et pour fournir lesdites données d'identification (50) au robot mobile (2), ledit robot mobile (2) étant conçu pour, de manière autonome
- se déplacer à travers l'environnement (1) en utilisant la fonctionnalité SLAM,
- naviguer (122) jusqu'aux zones d'intérêt considérées (11, 12, 13) en utilisant lesdites données d'identification (50),
- détecter (124) les zones d'intérêt (11, 12, 13) compte tenu desdites données d'identification (50), et
- effectuer un balayage (126) de la ou de chacune des zones d'intérêt (11, 12, 13) afin de générer les données de balayage tridimensionnel (60).

12. Système selon la revendication 11,
dans lequel le dispositif de balayage (26) comprend
- au moins un numériseur laser,
- au moins un numériseur à lumière structurée, et/ou
- au moins une caméra temps de vol ; et/ou
dans lequel le robot mobile (2) est conçu sous la forme :
- d'un robot sur pieds comprenant des pieds actionnés lui permettant de se déplacer à travers l'environnement (1),
- d'un robot sur roues comprenant des roues actionnées lui permettant de se déplacer à travers l'environnement (1), et/ou
- d'un aéronef téléguidé, notamment un quadrirotor comprenant des rotors actionnés lui permettant de se déplacer à travers l'environnement (1).

13. Système selon la revendication 11 ou 12, dans lequel l'appareil mobile (30) comprend un écran (35), au moins une caméra (36) et une fonctionnalité d'acquisition d'image permettant de générer les données d'image (51), sur déclenchement de l'appareil mobile (30) par l'utilisateur (3) et au moyen de l'au moins une caméra (36), dans lequel système notamment
- la fonctionnalité d'acquisition d'image est fournie par une application logicielle installée sur l'appareil mobile (30), l'écran (35) étant conçu sous forme d'écran tactile et l'application logicielle permettant à l'utilisateur (3) de marquer une zone (37) dans une image (33) affichée à l'écran (35) afin de la définir comme zone d'intérêt (11, 12, 13) ;
- l'appareil mobile (30) comprend une centrale inertielle, une boussole et/ou un récepteur GNSS ;
- l'au moins une caméra (36) est conçue sous forme d'une caméra temps de vol et les données d'image (51) comprennent des informations de profondeur ;
- l'appareil mobile (30) est conçu pour détecter la position (21, 22, 23) de l'appareil mobile (30) pendant l'acquisition des données d'image (51), et le système est conçu pour générer (114) les données d'identification (50) en utilisant les données de position (52) relatives à la position (21, 22, 23) détectée ;
- l'appareil mobile (30) est conçu pour détecter la pose adoptée par l'appareil mobile (30) pendant l'acquisition des données d'image (51), et le système est conçu pour générer (114) les données d'identification (50) en utilisant les données de pose (53) relatives à la pose détectée ; et/ou
- l'appareil mobile (30) est conçu pour suivre un chemin (20) à travers l'environnement (1), notamment en utilisant une fonctionnalité SLAM de l'appareil mobile (30), des données IMU d'une centrale inertielle de l'appareil mobile (30), et/ou des données d'image acquises en continu par l'au moins une caméra (36), et le système est conçu pour générer (114) les données d'identification (50) en utilisant des données de chemin (54) relatives au chemin (20).

14. Système selon l'une quelconque des revendications 11 à 13, dans lequel le robot mobile est conçu pour recevoir des données d'environnement (55) comprenant des données 3D de l'environnement (1), et pour, de manière autonome
- se déplacer à travers l'environnement (1) en utilisant les données d'environnement (55) et la fonctionnalité SLAM,
- naviguer (122) jusqu'aux zones d'intérêt (11, 12, 13) en utilisant lesdites données d'environnement (55) et les positions (21, 22, 23) déterminées, et/ou
- détecter les zones d'intérêt (11, 12, 13) compte tenu des données d'image et des données 3D, les données d'image comprenant notamment des informations de profondeur.

15. Système selon l'une quelconque des revendications 11 à 14, dans lequel l'appareil mobile (30) comprend une fonctionnalité SLAM de localisation et cartographie simultanées de l'appareil mobile (30) et est conçu pour suivre le chemin en utilisant ladite fonctionnalité SLAM, celle-ci utilisant notamment, pour suivre le chemin (20) :
- des données IMU d'une centrale inertielle de l'appareil mobile (30), et/ou
- des données d'image acquises en continu par au moins une caméra de l'appareil mobile (30).
